# EUROPÄISCHE PATENTSCHRIFT

(11) **EP 3 390 847 B1**
(45) Veröffentlichungstag und Bekanntmachung des Hinweises auf die Patenterteilung: **29.01.2020**
(21) Anmeldenummer: 16798082.0
(22) Anmeldetag: 20.10.2016
(51) Int. Cl.: F16C 19/50, F16C 33/46, F16C 33/58

(54) **SEGMENTWÄLZLAGER UND SCHEIBENBREMSENVORRICHTUNG**
SEGMENT ROLLING BEARING AND DISK BRAKE DEVICE
PALIER À ROULEMENT SEGMENTÉ ET DISPOSITIF DE FREIN À DISQUE

(30) Priorität: 15.12.2015 DE 102015225259
(43) Veröffentlichungstag der Anmeldung: 24.10.2018
(73) Patentinhaber: Schaeffler Technologies AG & Co. KG, 91074 Herzogenaurach (DE)
(72) Erfinder: LANG, Johannes, 91097 Oberreichenbach (DE); ANGER, Andre, 91486 Uehlfeld (DE)
(86) Internationale Anmeldenummer: PCT/DE2016/200481
(87) Internationale Veröffentlichungsnummer: WO 2017/101918

(56) Entgegenhaltungen:
- DE-B3-102014 206 803
- DE-B3-102014 206 804
- JP-A- 2010 096 196

## Beschreibung

Die Erfindung betrifft ein Segmentwälzlager umfassend eine Lagerschale mit einer gekrümmten Laufbahn für Wälzkörper und einen Segmentkäfig umfassend eine Anzahl an Wälzkörpern, wobei die Lagerschale an ihren beiden Längsseiten jeweils einen Führungssteg zur seitlichen Führung des Segmentkäfigs aufweist, und wobei ein jeder Führungssteg im Wesentlichen senkrecht zur Laufbahn der Lagerschale ausgerichtet ist. Die Erfindung betrifft weiterhin eine Scheibenbremsenvorrichtung mit einem derartigen Segmentwälzlager.

Segmentwälzlager und Scheibenbremsenvorrichtungen der eingangs genannten Art sind bereits bekannt. Sie dienen zur Abstützung des Betätigungshebels in pneumatisch betätigten Scheibenbremsen. Derartige Segmentwälzlager arbeiten auch unter hoher Last reibungsarm und sind notwendig, um die Hysterese im System zu minimieren.

So beschreibt die EP 2312173 A1 ein derartiges Segmentwälzlager und eine Luftscheibenbremsvorrichtung mit einem derartigen Segmentwälzlager. Um die Bewegung des Segmentkäfigs an einem Ende der Lagerschale zu begrenzen, sind zwei Vorsprünge vorgesehen, die durch ein Umbiegen von zwei Laschen, die am Ende der Lagerschale in Verlängerung der Laufbahn angeordnet sind, ausgebildet sind. Dabei werden die beiden Laschen in Richtung des Segmentkäfigs um ca. 90° umgebogen, wobei die Oberfläche der Laschen, die unmittelbar in die Laufbahn übergeht, den Endanschlag für den Segmentkäfig ausbildet. Ein weiteres relevantes Segmentwälzlager wird in der JP 2010-096196 beschrieben.

Die Endanschläge sollen verhindern, dass der Segmentkäfig bei einer Drehbewegung aus der Lagerschale heraus gedreht wird, was zu einer Überlastung der im Bereich der Laufbahn der Lagerschale verbleibenden Wälzkörper führen kann. Auch besteht die Gefahr einer Kollision des Segmentkäfigs mit den Umgebungsbauteilen, was zu einer Beschädigung oder Zerstörung des Segmentkäfigs führen kann.

Die bekannten Endanschläge, wie die den Enden der Lagerschalen angeordneten, umgebogenen Laschen, weisen aufgrund des Umbiegevorgangs in ihrer Positionierung keine hohe Genauigkeit auf. Problematisch ist demnach, dass die genaue Position der gebildeten Vorsprünge bzw. Endanschläge gegenüber dem Segmentkäfig und damit die Position der Endanschläge wesentlich davon abhängt, wie exakt der Biegevorgang ausgeführt wurde. So führt eine geringfügiges Rückfedern der Laschen nach dem Biegen bereits zu einem um Millimeter oder Bruchteile eines Millimeters veränderter Position des Endanschlags und einer größeren Auslenkbarkeit des Segmentkäfigs. Oftmals ist die hier erzielbare Genauigkeit der Anordnung der Endanschläge nicht ausreichend hoch.

Zudem stehen diese gebildeten Vorsprünge bzw. Endanschläge über die technisch notwendige Länge der Laufbahn hinaus und verlängern somit die Gesamtlänge der Lagerschale und damit auch den Platzbedarf für das Segmentwälzlager insgesamt.

Es ist daher Aufgabe der Erfindung, ein Segmentwälzlager bereitzustellen, dass eine präzise und kostengünstige Anordnung der Endanschläge für den Segmentkäfig ermöglicht, wobei die Gesamtlänge der Lagerschale nicht durch Endanschläge vergrößert wird. Weiterhin soll eine Scheibenbremsenvorrichtung mit einem solchen Segmentwälzlager bereitgestellt werden.

Die Aufgabe wird für das Segmentwälzlager umfassend eine Lagerschale mit einer gekrümmten Laufbahn für Wälzkörper und einen Segmentkäfig umfassend eine Anzahl an Wälzkörpern, wobei die Lagerschale an ihren beiden Längsseiten jeweils einen Führungssteg zur seitlichen Führung des Segmentkäfigs aufweist, wobei ein jeder Führungssteg im Wesentlichen senkrecht zur Laufbahn der Lagerschale ausgerichtet ist, dadurch gelöst, dass ein jeder Führungssteg an jedem seiner beiden Enden mindestens einen Einschnitt aufweist, der senkrecht zur Längsseite der Lagerschale ausgebildet ist, derart dass an beiden Enden der Lagerschale ein- oder beidseitig Führungsstegabschnitte ausgebildet sind, und wobei die Führungsstegabschnitte in Richtung der Laufbahn umgebogen sind und Endanschläge für den Segmentkäfig ausbilden.

Unter einem "im Wesentlichen senkrecht" zur Laufbahn der Lagerschale ausgerichteten Führungssteg wird ein solcher verstanden, der in einem Winkel im Bereich von 80 bis 90° zur Laufbahnebene ausgerichtet ist. Demnach kann ein Führungssteg auch geringfügig in Richtung des Segmentkäfigs gekippt angeordnet sein.

Das erfindungsgemäße Segmentwälzlager ist besonders einfach und kostengünstig herstellbar. Die Führungsstegabschnitte werden soweit in Richtung des Segmentkäfigs umgebogen, dass die Schnittflächen an den Einschnitten als Endanschläge für den Segmentkäfig wirken. Aufgrund der Tatsache, dass die Position des Einschnitts äußerst präzise gesetzt werden kann und das Umbiegen der Führungsstegabschnitte hier keine Positionsänderung der gebildeten Schnittflächen mit sich bringt, ist die Positionierung der Endanschläge besonders genau und einfach vornehmbar. Der Biegevorgang hat hier keinen Einfluß auf die Anordnung der Endanschläge mehr. Der Segmentkäfig ist mit einer definierten Wegbegrenzung in der Lagerschale festgelegt.

Zudem sind die Führungsstegabschnitte in die Lagerschale integriert angeordnet und stehen nicht über diese vor. Dadurch kann der erforderliche Bauraum für das Segmentwälzlager minimiert werden.

Die Führungsstegabschnitte werden dabei bevorzugt um 80 bis 110°, insbesondere um 90°, in Richtung der Laufbahn bzw. des Segmentkäfigs umgebogen, so dass eine Schnittfläche am jeweiligen Einschnitt als ein Endanschlag für den Segmentkäfig fungiert.

Die Lagerschale mit den Führungsstegen ist insbesondere aus einem Blechstreifen durch spanloses Umformen gebildet
Dabei kann an einem Ende der Lagerschale lediglich an einem Führungssteg ein solche Führungsstegabschnitt ausgebildet sein oder an beiden Führungsstegen der Lagerschale. Ist lediglich ein Führungsstegabschnitt pro Ende der Lagerschale vorhanden, so ist an jedem Ende der Lagerschale lediglich an einer ihrer Längsseiten ein Endanschlag für den Segmentkäfig vorhanden. Dabei können die Endanschläge an den beiden Enden der Lagerschale an dem gleichen Führungssteg angeordnet sein oder sich gegenüberliegend jeweils an einem Führungssteg angeordnet sein. Bei einer Ausbildung von jeweils einem Führungsstegabschnitt an beiden Längsseiten der Lagerschale ist die Auslenkung des Segmentkäfigs durch zwei Endanschläge begrenzt und damit eine stabilere Bauform gegeben, die höhere Kräfte aufnehmen kann.

Es hat sich bewährt, wenn jeweils ein Einschnitt in den jeweiligen Führungssteg in einem Abstand vom jeweiligen Ende der Lagerschale angeordnet ist, der 5 bis 15 % einer Gesamtlänge der Lagerschale entspricht. In diesem Fall bildet das Ende des Führungsstegs gleichzeitig den in Richtung des Segmentkäfigs umgebogenen Führungsstegabschnitt. Diese Ausführungsform ist besonders kostengünstig herstellbar, wobei eine Begrenzung der Auslenkung des Segmentkäfigs an beiden Enden der Lagerschale realisierbar ist.

Alternativ hat es sich bewährt, wenn jeweils zwei Einschnitte in den jeweiligen Führungssteg in einem Abstand vom jeweiligen Ende der Lagerschale angeordnet sind, der 5 bis 20 % einer Gesamtlänge der Lagerschale entspricht, wobei die Führungsstegabschnitte jeweils zwischen den zwei Einschnitten angeordnet sind. Hier ist ein Führungsstegabschnitt vom Ende des Führungsstegs beabstandet angeordnet. Der Führungssteg verläuft ausgehend vom umgebogenen Führungsstegabschnitt weiter in ursprünglicher Ausrichtung gegenüber der Lauffläche in Richtung des Endes der Lagerschale. Nachdem hier pro Führungsstegabschnitt zwei Einschnitte gebildet werden müssen, ist diese Ausführungsform geringfügig teurer als die erstgenannte Variante.

Der Segmentkäfig weist bevorzugt mindestens eine Aufnahmeöffnung zur Aufnahme von zylindrischen Wälzkörpern auf, wobei insbesondere mehrere Aufnahmeöffnungen zur Aufnahme von jeweils zwei zylindrischen Wälzkörpern ausgebildet sind. Dies erhöht die Tragkraft des Segmentwälzlagers.

Der Segmentkäfig ist bevorzugt aus Kunststoff gebildet, kann aber auch aus Metall gefertigt sein. Die Variante aus Kunststoff ist im Spritzgussverfahren einfach herzustellen und weist daher neben einem geringeren Gewicht auch Kostenvorteile gegenüber einem Metallkäfig auf.

Insbesondere ist der Segmentkäfig durch jeweils eine Prägenase am Führungssteg gegen ein Herausfallen aus der Lagerschale gesichert. Eine derartige Verliersicherung des Segmentkäfigs erleichtert die Handhabung des Segmentwälzlagers bei Versand, Montage und Wartung.

Es ist von Vorteil, wenn der Segmentkäfig an seinen den Führungsstegen zugewandten Längsseiten jeweils eine Längsnut aufweist. Insbesondere weist dabei jede Längsnut mindestens eine Nutöffnung und einen zur mindestens einen Nutöffnung benachbarten elastischen Käfigabschnitt auf, welcher beim Einsetzen des Segmentkäfigs in die Lagerschale verformbar ist und ein Einschnappen des Segmentkäfigs in die Lagerschale im Bereich der Prägenasen ermöglicht. Die Montage des Segmentwälzlagers bzw. das Einsetzen des Segmentkäfigs in die Lagerschale wird dadurch wesentlich vereinfacht.

Die Aufgabe wird für eine Scheibenbremsenvorrichtung dadurch gelöst, dass diese ein erfindungsgemäßes Segmentwälzlager aufweist. Die Scheibenbremsvorrichtung ist dadurch besonders einfach und kostengünstig bei gleichzeitig hoher Präzision der Auslenkwinkel des Segmentkäfigs herstellbar. Hinsichtlich eines Einsatzes des erfindungsgemäßen Segmentwälzlagers wird unter anderem auf bekannte Scheibenbremsenvorrichtungen verwiesen, wie diese im oben genannten Stand der Technik gezeigt sind.

Die Figuren 1 bis 6 sollen erfindungsgemäße Segmentwälzlager beispielhaft erläutern. So zeigt:
- FIG 1: eine dreidimensionale Ansicht eines Segmentwälzlagers;
- FIG 2: die Lagerschale des Segmentwälzlagers gemäß FIG 1 in dreidimensionaler Ansicht;
- FIG 3: einen vergrößerten Ausschnitt aus dem Segmentwälzlager gemäß FIG 1 im Bereich eines Führungsstegs;
- FIG 4: die Lagerschale des Segmentwälzlagers gemäß FIG 1 in drei dimensionaler Ansicht;
- FIG 5: ein weiteres Segmentwälzlager in dreidimensionaler Ansicht; und
- FIG 6: ein weiteres Segmentwälzlager in dreidimensionaler Ansicht.

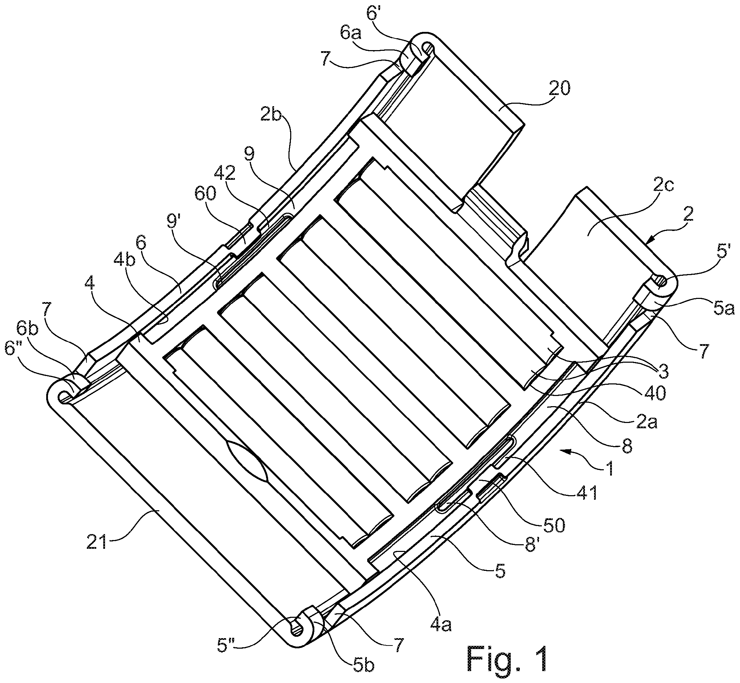

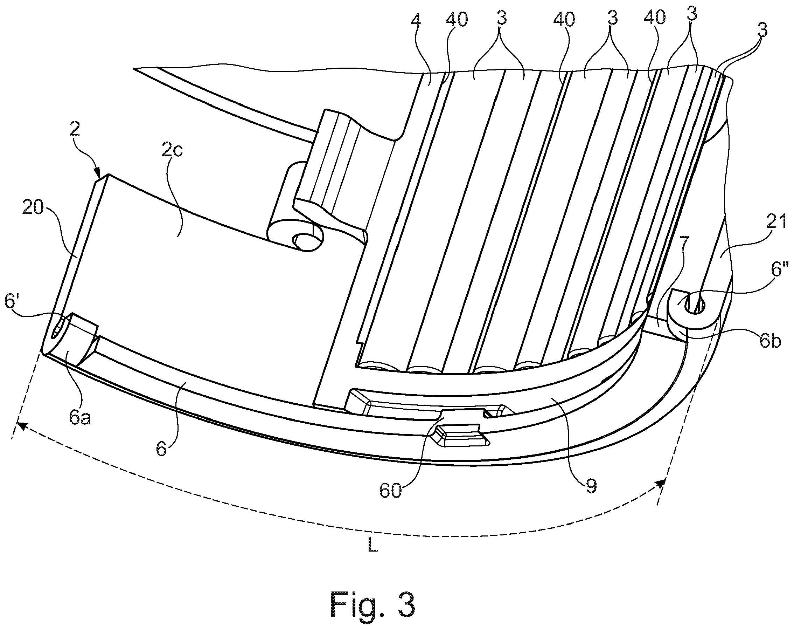

FIG 1 zeigt eine dreidimensionale Ansicht eines Segmentwälzlagers 1, umfassend eine Lagerschale 2 mit einer gekrümmten Laufbahn 2c für Wälzkörper 3 und einen Segmentkäfig 4 umfassend eine Anzahl an Wälzkörpern 3. Die Lagerschale 2 weist an ihren beiden Längsseiten 2a, 2b jeweils einen Führungssteg 5, 6 zur seitlichen Führung des Segmentkäfigs 4 auf, wobei ein jeder Führungssteg 5, 6 im Wesentlichen senkrecht zur Laufbahn 2c der Lagerschale 2 ausgerichtet ist. Ein jeder Führungssteg 5, 6 weist an jedem seiner beiden Enden 5', 5"; 6', 6" einen Einschnitt 7 auf, der senkrecht zur Längsseite 2a, 2b der Lagerschale 2 ausgebildet ist, derart dass an beiden Enden 20, 21 der Lagerschale 2 beidseitig Führungsstegabschnitte 5a, 5b; 6a, 6b ausgebildet sind. Die Führungsstegabschnitte 5a, 5b; 6a, 6b sind in Richtung der Laufbahn 2c umgebogen und bilden Endanschläge für den Segmentkäfig 4 aus. Die Gesamtlänge L der Lagerschale 2 (vergleiche FIG 3) erstreckt sich zwischen den beiden Enden 20, 21 der Lagerschale 2. Jeweils ein Einschnitt 7 ist in den Führungsstegen 5, 6 in einem Abstand vom jeweiligen Ende 20, 21 der Lagerschale 2 angeordnet, der ca. 10 % der Gesamtlänge L der Lagerschale 2 entspricht. Der Segmentkäfig 4 aus Kunststoff weist eine Anzahl an Aufnahmeöffnungen 40 zur Aufnahme der zylindrischen Wälzkörpern 3 auf, wobei die Aufnahmeöffnungen 40 zur Aufnahme von jeweils zwei zylindrischen Wälzkörpern 3 ausgebildet sind. Der Segmentkäfig 4 ist durch jeweils eine Prägenase 50, 60 am Führungssteg 5, 6 gegen ein Herausfallen aus der Lagerschale 2 gesichert. Weiterhin weist der Segmentkäfig 4 an seinen den Führungsstegen 5, 6 zugewandten Längsseiten 4a, 4b jeweils eine Längsnut 8, 9 auf. Jede Längsnut 8, 9 weist eine Nutöffnung 8', 9' und einen zur Nutöffnung 8', 9' benachbarten elastischen Käfigabschnitt 41, 42 auf, welcher beim Einsetzen des Segmentkäfigs 4 in die Lagerschale 2 verformbar ist und ein Einschnappen des Segmentkäfigs 4 in die Lagerschale 2 im Bereich der Prägenasen 50, 60 ermöglicht.

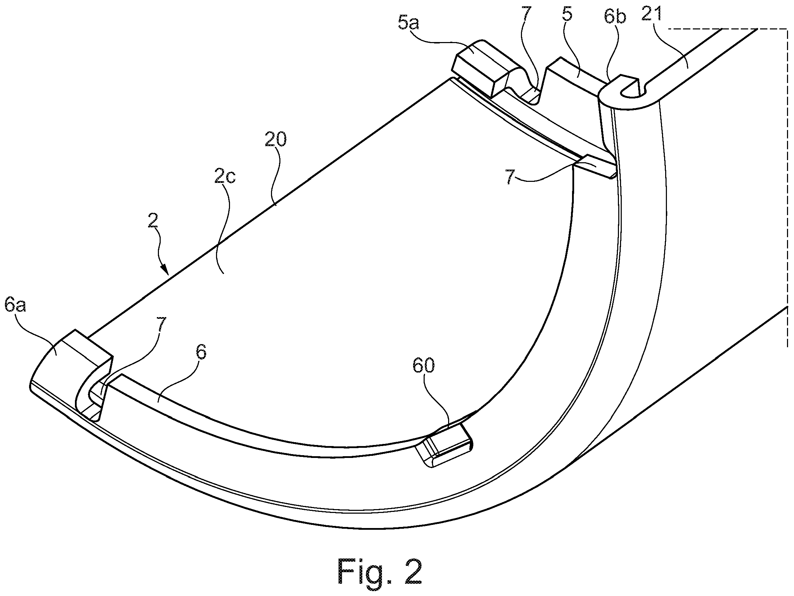

FIG 2 zeigt die Lagerschale des Segmentwälzlagers 1 gemäß FIG 1 in dreidimensionaler Ansicht. Gleiche Bezugszeichen wie in FIG 1 kennzeichnen gleiche Elemente.

FIG 3 zeigt einen vergrößerten Ausschnitt aus dem Segmentwälzlager 1 gemäß FIG 1 im Bereich des Führungsstegs 6. Gleiche Bezugszeichen wie in FIG 1 kennzeichnen gleiche Elemente. Die Gesamtlänge L der Lagerschale 2 erstreckt sich zwischen den beiden Enden 20, 21 der Lagerschale 2.

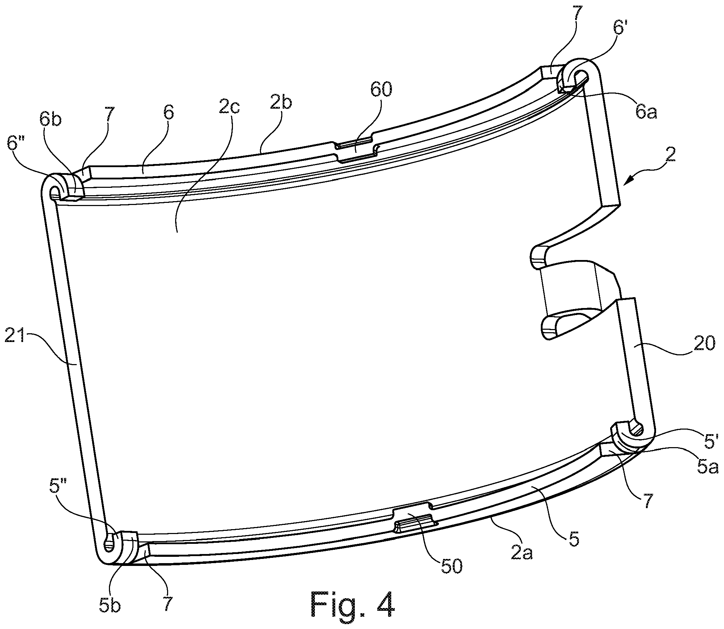

FIG 4 zeigt die Lagerschale 2 des Segmentwälzlagers gemäß FIG 1 in dreidimensionaler Ansicht. Gleiche Bezugszeichen wie in FIG 1 kennzeichnen gleiche Elemente.

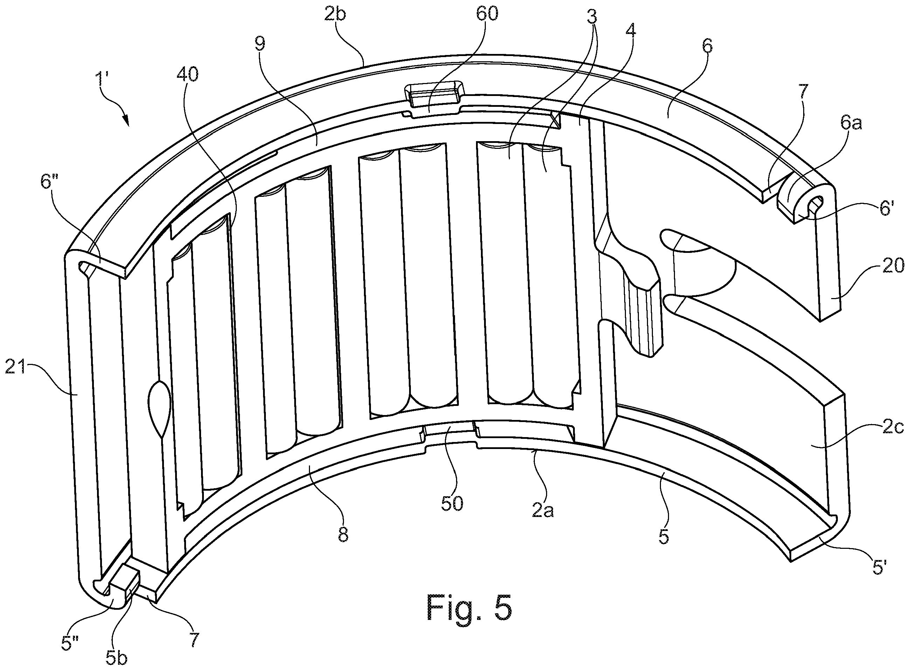

FIG 5 zeigt eine dreidimensionale Ansicht eines weiteren Segmentwälzlagers 1', umfassend eine Lagerschale 2 mit einer gekrümmten Laufbahn 2c für Wälzkörper 3 und einen Segmentkäfig 4 umfassend eine Anzahl an Wälzkörpern 3. Die Lagerschale 2 weist an ihren beiden Längsseiten 2a, 2b jeweils einen Führungssteg 5, 6 zur seitlichen Führung des Segmentkäfigs 4 auf, wobei ein jeder Führungssteg 5, 6 im Wesentlichen senkrecht zur Laufbahn 2c der Lagerschale 2 ausgerichtet ist. Ein jeder Führungssteg 5, 6 weist an einem seiner beiden Enden 5", 6' einen Einschnitt 7 auf, der senkrecht zur Längsseite 2a, 2b der Lagerschale 2 ausgebildet ist, derart dass an beiden Enden 20, 21 der Lagerschale 2 einseitig Führungsstegabschnitte 5b, 6a ausgebildet sind. Die Führungsstegabschnitte 5b, 6a sind in Richtung der Laufbahn 2c umgebogen und bilden einseitige Endanschläge für den Segmentkäfig 4 aus. Im Übrigen kennzeichnen gleiche Bezugszeichen wie in FIG 1 gleiche Elemente.

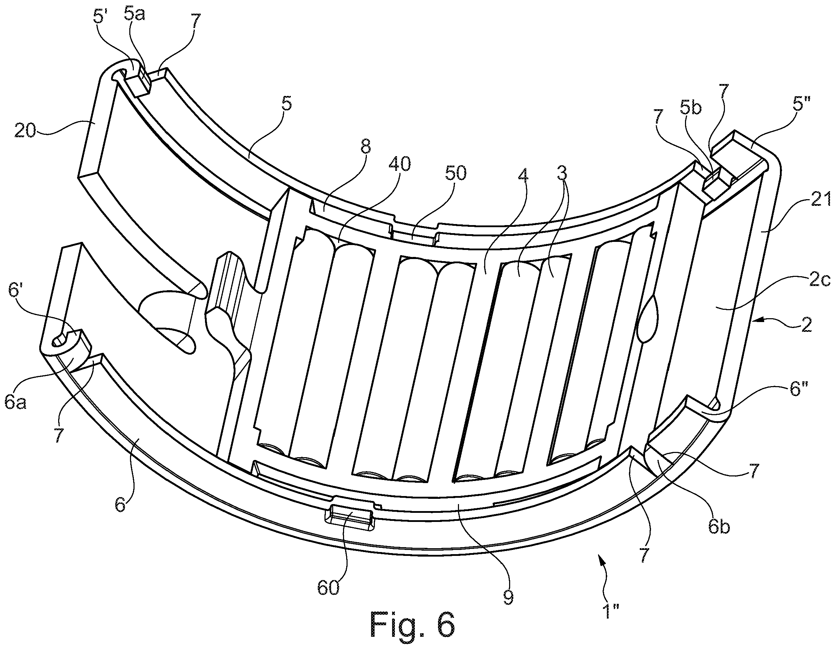

FIG 6 zeigt eine dreidimensionale Ansicht eines weiteren Segmentwälzlagers 1", umfassend eine Lagerschale 2 mit einer gekrümmten Laufbahn 2c für Wälzkörper 3 und einen Segmentkäfig 4 umfassend eine Anzahl an Wälzkörpern 3. Die Lagerschale 2 weist an ihren beiden Längsseiten 2a, 2b jeweils einen Führungssteg 5, 6 zur seitlichen Führung des Segmentkäfigs 4 auf, wobei ein jeder Führungssteg 5, 6 im Wesentlichen senkrecht zur Laufbahn 2c der Lagerschale 2 ausgerichtet ist. Jeder Führungssteg 5, 6 weist an seinen dem Ende 20 der Lagerschale 2 zugewandten Ende 5', 6' einen Einschnitt 7 auf, der senkrecht zur Längsseite 2a, 2b der Lagerschale 2 ausgebildet ist, derart dass an dem Ende 20 der Lagerschale 2 beidseitig Führungsstegabschnitte 5a, 6a ausgebildet sind. Die Führungsstegabschnitte 5a, 6a sind in Richtung der Laufbahn 2c umgebogen und bilden Endanschläge für den Segmentkäfig 4 aus.
Jeder Führungssteg 5, 6 weist an seinen dem anderen Ende 21 der Lagerschale 2 zugewandten Ende 5", 6" zwei Einschnitte 7 auf, die senkrecht zur Längsseite 2a, 2b der Lagerschale 2 ausgebildet sind. Die zwei Einschnitte 7 in den jeweiligen Führungssteg 5, 6 sind in einem Abstand vom Ende 21 der Lagerschale 2 angeordnet, der 5 bis 20 % der Gesamtlänge L (vergleiche FIG 3) der Lagerschale 2 entspricht, wobei die Führungsstegabschnitte 5b, 6b jeweils zwischen den zwei Einschnitten 7 angeordnet sind. Die Führungsstegabschnitte 5b, 6b sind ebenso in Richtung der Laufbahn 2c umgebogen und bilden Endanschläge für den Segmentkäfig 4 aus. Die Führungsstege 5, 6 verlaufen nach den Führungselementabschnitten 5b, 6b weiter bis zu deren jeweiligem Ende 5", 6". Auf diese Weise kann ein Endanschlag an jeder beliebigen Position der Führungsstege 5, 6 der Lagerschale 2 auch mit Abstand von den Enden der Führungsstege 5", 6" angeordnet werden. Im Übrigen kennzeichnen gleiche Bezugszeichen wie in FIG 1 gleiche Elemente.

Die Figuren 1 bis 6 zeigen dabei lediglich beispielhafte Ausführungen des erfindungsgemäßen Segmentlagers. So können je nach Bedarf auch lediglich ein oder drei Führungselementabschnitte an der Lagerschale vorhanden sein. Auch können andere Segmentkäfige verwendet werden, deren mindestens eine Aufnahmeöffnung lediglich einen Wälzkörper oder mehr als zwei Wälzkörper aufnehmen kann.

### Bezugszeichenliste

- 1, 1', 1": Segmentwälzlager
- 2: Lagerschale
- 2a, 2b: Längsseite der Lagerschale
- 2c: Laufbahn
- 3: Wälzkörper
- 4: Segmentkäfig
- 4a, 4b: Längsseite des Segmentkäfigs
- 5: Führungssteg
- 5',5": Ende des Führungsstegs
- 5a, 5b: Führungsstegabschnitt
- 6: Führungssteg
- 6',6": Ende des Führungsstegs
- 6a, 6b: Führungsstegabschnitt
- 7: Einschnitt
- 8: Längsnut
- 8': Nutöffnung
- 9: Längsnut
- 9': Nutöffnung
- 20, 21: Ende der Lagerschale
- 40: Aufnahmeöffnung
- 41, 42: elastischer Käfigabschnitt
- L: Gesamtlänge der Lagerschale

## Patentansprüche

1. Segmentwälzlager (1,1',1") umfassend eine Lagerschale (2) mit einer gekrümmten Laufbahn (2c) für Wälzkörper (3) und einen Segmentkäfig (4) umfassend eine Anzahl an Wälzkörpern (3), wobei die Lagerschale (2) an ihren beiden Längsseiten (2a, 2b) jeweils einen Führungssteg (5, 6) zur seitlichen Führung des Segmentkäfigs (4) aufweist, wobei ein jeder Führungssteg (5, 6) senkrecht zur Laufbahn (2c) der Lagerschale (2) ausgerichtet ist, wobei ein jeder Führungssteg (5, 6) an jedem seiner beiden Enden (5', 5"; 6', 6") mindestens einen Einschnitt (7) aufweist, der senkrecht zur Längsseite (2a, 2b) der Lagerschale (2) ausgebildet ist, derart dass an beiden Enden (20, 21) der Lagerschale (2) ein- oder beidseitig Führungsstegabschnitte (5a, 5b; 6a, 6b) ausgebildet sind, dadurch gekennzeichnnet, dass die Führungsstegabschnitte (5a, 5b; 6a, 6b) in Richtung der Laufbahn (2c) umgebogen sind und Endanschläge für den Segmentkäfig (4) ausbilden.

2. Segmentwälzlager nach Anspruch 1, wobei jeweils ein Einschnitt (7) in den jeweiligen Führungssteg (5, 6) in einem Abstand vom jeweiligen Ende (20, 21) der Lagerschale (2) angeordnet ist, der 5 bis 15 % einer Gesamtlänge (L) der Lagerschale (2) entspricht.

3. Segmentwälzlager nach Anspruch 1, wobei jeweils zwei Einschnitte (7) in den jeweiligen Führungssteg (5, 6) in einem Abstand vom jeweiligen Ende (21) der Lagerschale (2) angeordnet sind, der 5 bis 20 % einer Gesamtlänge (L) der Lagerschale (2) entspricht, wobei die Führungsstegabschnitte (5b; 6b) jeweils zwischen den zwei Einschnitten (7) angeordnet sind.

4. Segmentwälzlager nach einem der Ansprüche 1 bis 3, wobei der Segmentkäfig (4) mindestens eine Aufnahmeöffnung (40) zur Aufnahme von zylindrischen Wälzkörpern (3) aufweist.

5. Segmentwälzlager nach Anspruch 4, wobei mehrere Aufnahmeöffnungen (40) zur Aufnahme von jeweils zwei zylindrischen Wälzkörpern (3) ausgebildet sind.

6. Segmentwälzlager nach einem der Ansprüche 1 bis 5, wobei der Segmentkäfig (4) aus Kunststoff gebildet ist.

7. Segmentwälzlager nach einem der Ansprüche 1 bis 6, wobei der Segmentkäfig (4) durch jeweils eine Prägenase (50, 60) am Führungssteg (5, 6) gegen ein Herausfallen aus der Lagerschale (2) gesichert ist.

8. Segmentwälzlager nach einem der Ansprüche 1 bis 7, wobei der Segmentkäfig (4) an seinen den Führungsstegen (5, 6) zugewandten Längsseiten (4a, 4b) jeweils eine Längsnut (8, 9) aufweist.

9. Segmentwälzlager nach Anspruche 8, wobei jede Längsnut (8, 9) mindestens eine Nutöffnung (8', 9') und einen zur mindestens einen Nutöffnung (8', 9') benachbarten elastischen Käfigabschnitt (41, 42) aufweist, welcher beim Einsetzen des Segmentkäfigs (4) in die Lagerschale (2) verformbar ist und ein Einschnappen des Segmentkäfigs (4) in die Lagerschale (2) im Bereich der Prägenasen (50, 60) ermöglicht.

10. Scheibenbremsenvorrichtung, die ein Segmentwälzlager (1,1',1") nach einem der Ansprüche 1 bis 9 aufweist.

## Claims

1. A segment rolling bearing (1, 1', 1") comprising a bearing shell (2) with a curved track (2c) for rolling elements (3) and a segment cage (4) comprising a number of rolling elements (3), the bearing shell (2) each having a guiding strip (5, 6) on the two longitudinal sides (2a, 2b) thereof for lateral guidance of the segment cage (4), each guiding strip (5, 6) being aligned to be perpendicular to the track (2c) of the bearing shell (2), each guiding strip (5, 6) having at least one incision (7) at each of the two ends (5', 5", 6', 6") thereof, which is formed to be perpendicular to the longitudinal side (2a, 2b) of the bearing shell (2) in such a way that guiding strip portions (5a, 5b; 6a, 6b) are formed on both ends (20, 21) of the bearing shell (2), **characterised in that** the guiding strip portions (5a, 5b; 6a, 6b) are bent in the direction of the track (2c) and form end stops for the segment cage (4).

2. The segment rolling bearing according to claim 1, wherein in each case an incision (7) is arranged in the respective guiding strip (5, 6) at a distance from the respective end (20, 21) of the bearing shell (2) which corresponds to 5 to 15% of an overall length (L) of the bearing shell (2).

3. The segment roller bearing according to claim 1, wherein in each case two incisions (7) are arranged in the respective guiding strip (5, 6) at a distance from the respective end (21) of the bearing shell (2) which corresponds to 5 to 20% of an overall length (L) of the bearing shell (2), wherein the guiding strip portions (5b; 6b) are respectively arranged between the two incisions (7).

4. The segment rolling bearing according to any one of claims 1 through 3, wherein the segment cage (4) has at least one receiving opening (40) for receiving cylindrical rolling elements (3).

5. The segment rolling bearing according to claim 4, wherein multiple receiving openings (40) are formed for receiving two cylindrical rolling elements (3).

6. The segment rolling bearing according to any one of claims 1 through 5, wherein the segment cage (4) is formed from plastic.

7. The segment roller bearing according to any one of claims 1 through 6, wherein the segment cage (4) is secured against falling out of the bearing shell (2) by a respective embossed lug (50, 60) on the guiding strip (5, 6).

8. The segment rolling bearing according to any one of claims 1 through 7, wherein the segment cage (4) has a longitudinal groove (8, 9) on each of the longitudinal sides (4a, 4b) thereof which face the guiding strips (5, 6).

9. The segment roller bearing according to claim 8, wherein each longitudinal groove (8, 9) has at least one groove opening (8', 9') and an elastic cage portion (41, 42) adjacent to at least one groove opening (8', 9'), which is deformable upon insertion of the segment cage (4) into the bearing shell (2) and enables a snapping of the segment cage (4) into the bearing shell (2) in the region of the embossed lugs (50, 60).

10. A disc brake device comprising a segment roller bearing (1, 1', 1") according to any one of claims 1 through 9.

## Revendications

1. Palier à roulement segmenté (1,1',1") comprenant un coussinet de palier (2) avec un chemin de roulement incurvé (2c) pour les éléments roulants (3) et une cage segmentée (4) comprenant plusieurs éléments roulants (3), le coussinet de palier (2) présentant, sur ses deux côtés longitudinaux (2a, 2b), respectivement une bande de guidage (5, 6) pour le guidage latéral de la cage segmentée (4), chaque bande de guidage (5, 6) étant alignée perpendiculairement au chemin de roulement (2c) du coussinet de palier (2), chaque bande de guidage (5, 6) présentant au moins une encoche (7) à chacune de ses deux extrémités (5', 5", 6', 6") qui est formée perpendiculairement au côté longitudinal (2a, 2b) du coussinet de palier (2) de manière à ce que des sections de bande de guidage (5a, 5b ; 6a, 6b) soient formées aux deux extrémités (20, 21) du coussinet de palier (2), **caractérisé en ce que** les sections de bande de guidage (5a, 5b ; 6a, 6b) sont courbées dans la direction du chemin de roulement (2c) et forment des butées terminales pour la cage segmentée (4).

2. Palier à roulement segmenté selon la revendication 1, dans lequel est disposée une encoche (7) dans la bande de guidage respective (5, 6) à une distance de l'extrémité respective (20, 21) du coussinet de palier (2), qui correspond à une proportion de 5 à 15 %, d'une longueur totale (L) du coussinet de palier (2).

3. Palier à roulement segmenté selon la revendication 1, dans lequel sont disposées respectivement deux encoches (7) dans la bande de guidage respective (5, 6) à une distance de l'extrémité respective (21) du coussinet de palier (2), qui correspond à une proportion de 5 à 20 % d'une longueur totale (L) du coussinet de palier (2), les sections de bande de guidage (5b ; 6b) étant disposées respectivement entre les deux encoches (7).

4. Palier à roulement segmenté selon l'une quelconque des revendications 1 à 3, dans lequel la cage segmentée (4) présente au moins une ouverture de réception (40) pour recevoir des éléments roulants cylindriques (3).

5. Palier à roulement segmenté selon la revendication 4, dans lequel une pluralité d'ouvertures de réception (40) sont formées afin de recevoir respectivement deux éléments roulants cylindriques (3).

6. Palier à roulement segmenté selon l'une quelconque des revendications 1 à 5, dans lequel la cage segmentée (4) est en matière plastique.

7. Palier à roulement segmenté selon l'une quelconque des revendications 1 à 6, dans lequel la cage segmentée (4) est empêchée de tomber du coussinet de palier (2) par une came matricée respective (50, 60) sur la bande de guidage (5, 6).

8. Palier à roulement segmenté selon l'une quelconque des revendications 1 à 7, dans lequel la cage segmentée (4) présente une rainure longitudinale (8, 9) respectivement au niveau de ses côtés longitudinaux (4a, 4b) faisant face aux bandes de guidage (5, 6).

9. Palier à roulement segmenté selon la revendication 8, dans lequel chaque rainure longitudinale (8, 9) présente au moins une ouverture de rainure (8', 9') et une section de cage élastique (41, 42) adjacente à l'au moins une ouverture de rainure (8', 9') qui, lors de l'insertion de la cage segmentée (4) dans le coussinet de palier (2), est déformable et permet un encliquetage de la cage segmentée (4) dans le coussinet de palier (2) dans la région des cames matricées (50, 60).

10. Dispositif de frein à disque comprenant un palier à roulement segmenté (1, 1', 1") selon l'une quelconque des revendications 1 à 9.
